# EUROPÄISCHE PATENTSCHRIFT

(11) **EP 2 831 415 B1**
(45) Veröffentlichungstag und Bekanntmachung des Hinweises auf die Patenterteilung: **25.05.2016**
(21) Anmeldenummer: 13736498.0
(22) Anmeldetag: 28.03.2013
(51) Int. Cl.: F03D 80/00, H02G 13/00

(54) **ANSCHLUSSVORRICHTUNG FÜR EIN BLITZSCHUTZSYSTEM EINER WINDTURBINE**
CONNECTING DEVICE FOR A LIGHTNING PROTECTION SYSTEM OF A WIND TURBINE
DISPOSITIF DE BRANCHEMENT POUR UN SYSTÈME DE PARAFOUDRE D'UNE TURBINE ÉOLIENNE

(30) Priorität: 30.03.2012 DE 102012205208
(43) Veröffentlichungstag der Anmeldung: 04.02.2015
(73) Patentinhaber: Suzlon Energy GmbH, 18057 Rostock (DE)
(72) Erfinder: RIETZKOW, Andreas, 18069 Lambrechtshagen OT Sievershagen (DE)
(86) Internationale Anmeldenummer: PCT/EP2013/056675
(87) Internationale Veröffentlichungsnummer: WO 2013/144279

(56) Entgegenhaltungen:
- EP-A1- 1 209 446
- EP-A1- 2 234 235
- EP-A2- 1 577 551
- WO-A1-2004/044419
- WO-A1-2009/061209

## Beschreibung

Die Erfindung betrifft eine Windturbine mit einer Anschlussvorrichtung zum Anschließen eines ersten, fest mit einem Rotorblatt der Windturbine verbundenen, Blitzschutzleiters an einen zweiten, fest mit der Rotornabe der Windturbine angeordneten, Blitzschutzleiter. Das Rotorblatt der Windturbine ist dabei über ein Blattlager drehbar um seine Längsachse an der Rotornabe angeordnet und kann zum Verändern der aerodynamischen Eigenschaften des Rotors verstellt werden. Die Drehung des Rotorblattes wird mittels elektrischer Pitchantriebe durchgeführt.

Zum Schutz der Windturbine vor schädlichen Auswirkungen eines Blitzeinschlages werden Windturbinen mit einem Blitzschutzsystem ausgestattet. Dieses System besteht aus einen definierten, niederohmigen Strompfad der an den zu schützenden Komponenten der Windturbine vorbeiführt. Der Strompfad wird von einem im Rotorblatt angeordneten Blitzschutzleiter der von dem höchsten Punkt der Windturbine, was die Spitze des Rotorblatts entspricht, durch die Windturbine bis hinunter zum Erdboden führt. Da sich aber das Rotorblatt um seine Längsachse drehen kann, muss zwischen Rotorblatt und Rotornabe einen Übergang geschaffen werden der eine sichere Führung des Blitzstromes zulässt ohne dass die Bewegung des Rotorblattes eingeschränkt wird.

Bei bekannten Windturbinen wird dieser Übergang meistens durch eine Funkenstrecke realisiert. Die Funkenstrecke besteht aus zwei von einem Luftspalt getrennten Elektroden. Bei einem Potentialunterschied zwischen den beiden Elektroden wird die in den Luftspalt befindliche Luft durch das entstehende elektrische Feld ionisiert, so dass die Luft leitfähig wird. Der Potentialunterschied kann danach durch einen Funken zwischen den Elektroden ausgeglichen werden.

Um eine sichere Blitzstromübertragung gewährleisten zu können muss sichergestellt werden, dass ein korrekter Abstand zwischen den Elektroden eingehalten wird. Bekannte Windturbinen haben aber das Problem, dass die Fertigungstoleranzen so groß sind, so dass der Funkenabstand bei einer Drehung des Rotorblatts variiert und somit eine korrekte Funktion des Blitzschutzsystems nicht sichergestellt werden kann.

WO2004/044419A1 offenbart einen Windturbinenrotor mit einer Rotornabe und einer Vielzahl von Blättern, wobei jedes Blatt mittels eines Pitch-Lagers mit der Rotornabe verbunden ist, so dass das Blatt um seine Längsachse drehbar gegenüber der Rotornabe ist. Im Inneren des Blattes ist ein Blitzschutzleiter angebracht, der in elektrischem Kontakt mit einem Kontaktelement und einer fest mit der Rotornabe verbundenen Kontakteinheit außerhalb des Blattes steht.

Es ist eine Aufgabe der Erfindung, ein verbessertes Blitzschutzsystem anzugeben, welches unter anderem die Nachteile des Stands der Technik vermeidet. Insbesondere soll dabei erreicht werden, dass ein korrekter Abstand zwischen den Elektroden zur jeder Zeit sichergestellt wird.

Die Aufgabe wird erfindungsgemäß mit den Merkmalen des Hauptanspruchs 1 gelöst, indem eine Anschlussvorrichtung zum Anschließen eines ersten, fest mit einem Rotorblatt einer Windturbine verbindbaren, Blitzschutzleiters an einen zweiten, fest mit einer Rotornabe einer Windturbine anordenbaren, Blitzschutzleiters, in dem Rotorblatt angeordnet wird. Die Anschlussvorrichtung umfasst ein erstes und ein zweites Übertragungsmittel, wobei das erste Übertragungsmittel drehfest an dem Rotorblatt angeordnet und mit einem ersten in dem Rotorblatt angeordneten Blitzschutzleiter verbunden ist und das zweite Übertragungsmittel mit einem zweiten an der Rotornabe angeordneten Blitzschutzleiter verbunden ist. Das zweite Übertragungsmittel ist dabei derart angeordnet, so dass es drehbar um eine parallel zu einer Längsachse des Rotorblatts verlaufende Drehachse bewegbar ist, gleichzeitig aber sichergestellt wird, dass die beiden Übertragungsmittel sich nicht in radialer oder axialer Richtung der Drehachse zueinander bewegen können.

Das zweite Übertragungsmittel wird dabei in einer Haltevorrichtung angeordnet. Die Haltevorrichtung wird mittels Verbindungselementen an dem Rotorblatt angeordnet. Das Verbindungselement kann zum Beispiel eine Schraube, eine Niete oder ein Klebstoff sein. Die Haltevorrichtung kann zum Beispiel aus einem geformten Blech bestehen, an dem ein Drehlager zum Aufnehmen des zweiten Übertragungsmittels angeordnet wird. Das Blech wird dabei so geformt, so dass es eine Aufnahmefläche für das Drehlager und mindestens einen Flansch zum Befestigen der Haltevorrichtung an dem Rotorblatt umfasst.

Das zweite Übertragungsmittel umfasst einen Kontaktpunkt und ein Fixierelement zum Anschließen eines Blitzschutzleiters. Das Anschlusselement kann zum Beispiel als leitende Klemme oder Kabelschuh ausgebildet sein. Zum Stabilisieren des Blitzschutzleiters wird das Übertragungsmittel vorteilhafterweise mit einem Fixierelement zum Halten des Blitzschutzleiters versehen. Dies verhindert ein Knicken und eine Beschädigung des Blitzschutzleiters im Bereich des Anschlusselements. Das zweite Übertragungsmittel kann stabförmig ausgebildet werden und derart in dem Drehlager angeordnet sein, so dass die Längsachse des Übertragungsmittels mit der Drehachse des Drehlagers korrespondiert. Das Drehlager erlaubt eine Bewegung des zweiten Übertragungsmittels um die Drehachse des Drehlagers, verhindert jedoch eine Bewegung in axialer und radialer Richtung der Drehachse. Somit wird sichergestellt, dass der Abstand zwischen den beiden Übertragungsmitteln, nachdem dieser korrekt eingestellt wurde, in radialer und axialer Richtung fixiert wird.

Die Anschlussvorrichtung kann entweder als Funkenstrecke oder als Schleifkontakt ausgebildet sein. Falls die Anschlussvorrichtung als Funkenstrecke ausgebildet ist kann der Kontaktpunkt des zweiten Übertragungsmittels eine spitze Form aufweisen, dies hat den Vorteil, dass die benötigte Überschlagspannung zum Erzeugen eines Funkens verringert wird. Die Funkenstrecke eignet sich nur zur Übertragung von sehr hohen Blitzströmen, da eine elektrische Verbindung erst ab einem gewissen Potentialunterschied vorhanden ist.

Um eine Ableitung von geringen Poteritialströmen zu ermöglichen kann der Kontaktpunkt des zweiten Übertragungsmittels auch als Schleifbürste, der eine permanente elektrische Verbindung mit dem ersten Übertragungsmittel zulässt, ausgebildet sein.

In einer besonders vorteilhaften Ausführung wird das zweite Übertragungsmittel sowohl mit einer Funkenstrecke als auch mit einer Schleifbürste ausgebildet. Bei dieser Ausführung kann sowohl geringe sowie hohe Potentialströme über die Anschlussvorrichtung abgeleitet werden. Bei dieser Ausführung wird der Kontaktpunkt des zweiten Übertragungsmittels als Funkenstrecke ausgebildet und die Schleifbürste lösbar befestigt an dem zweiten Übertragungsmittel angeordnet. Die Schleifbürste kann zum Beispiel auf einen, von dem stabförmigen Übertragungsmittel in radialer Richtung ausstehenden, Haltearm angeordnet sein. Aus Platzgründen ist es vorteilhaft die Funkenstrecke und die Schleifbürste in derselben Anschlussvorrichtung zu kombinieren, es könnten aber auch mehrere Anschlussvorrichtungen, die entweder eine Funkenstrecke oder eine Schleifbürste aufweisen, in dem Rotorblatt angeordnet werden.

Die Haltevorrichtung und das erste Übertragungsmittel werden derart an dem Rotorblatt angeordnet, so dass die Zentralachsen der beiden Übertragungsmittel im montierten Zustand miteinander fluchten. Um zu verhindern, dass der Blitzstrom einen anderen Weg als über die Funkenstrecke nimmt und zum Beispiel das Drehlager beschädigt, können das erste Übertragungsmittel und die Haltevorrichtung und/oder das zweite Übertragungsmittel und das Drehlager elektrisch isoliert zu einander angeordnet werden. Die Haltevorrichtung kann zusätzlich höhenverstellbar ausgelegt werden so dass der axiale Abstand zwischen den beiden Übertragungsmitteln variiert werden kann. Dies kann zum Beispiel durch Anordnung von Unterlegscheiben zwischen Rotorblatt und Flansch der Haltevorrichtung, oder durch versehen des Flansches mit einem Gewinde und einen Gewindebolzen geschehen. Es wäre auch denkbar einen Innenring des Drehlagers mit einem Innengewinde und das zweite Übertragungsmittel mit einem Außengewinde zu versehen. Durch gegenseitiges drehen des Übertragungsmittels und des Innenrings des Drehlagers, lässt sich die Position des Übertragungsmittels in dem Drehlager und somit der Abstand der Funkenstrecke variieren. Nachdem der Funkenabstand eingestellt worden ist, kann die Position des Übertragungsmittels mit zum Beispiel einer Kontermutter arretiert werden.

Die Höhenverstellung hat den Vorteil, dass der Abstand zwischen den Übertragungsmitteln der Funkenstrecke an die in verschiedenen Ländern und an verschiedenen Standorten herrschenden Witterungsverhältnissen angepasst werden kann, so dass eine sichere Übertragung des Blitzstroms gewährleistet ist.

Die Anschlussvorrichtung wird vorteilhafterweise mit einem Abstand zu dem Blattlager auf dem Rotorblatt befestigt. Um den Blitzstrom zu der Anschlussvorrichtung zu leiten werden die Blitzschutzleiter als Kabel ausgebildet. Das erste Ende des im Rotorblatt angeordneten Blitzschutzleiters wird an die Spitze des Rotorblattes befestigt. Da die Spitze des Rotorblatts der höchste Punkt der Windturbine darstellt, wird der Blitz in diesem Punkt einschlagen. Das zweite Ende des im Rotorblatt angeordneten Blitzschutzleiters wird an dem ersten Übertragungsmittel angeschlossen, so dass der Blitzstrom von der Spitze des Rotorblattes an der Anschlussvorrichtung weitergeleitet wird. Der Blitzschutzleiter wird dabei fest an dem Rotorblatt montiert. In der Anschlussvorrichtung wird der Blitzstrom von dem ersten Übertragungsmittel über die Funkenstrecke an dem zweiten Übertragungsmittel weitergeleitet. Der Blitzstrom wird von dem zweiten Übertragungsmittel an einem zweiten, in der Rotornabe angeordneten, Blitzschutzleiter weitergeleitet. Der in der Rotornabe angeordnete Blitzschutzleiter wird soweit wie möglich fest mit der Rotornabe verbunden. Um aber eine Drehung des Rotorblattes zu ermöglichen, wird der Blitzschutzleiter in einer Schleife von der Rotornabe zu dem zweiten Übertragungsmittel geführt und an dem Kontaktpunkt und dem Fixierelement des Übertragungsmittels angeschlossen.

Damit die Blitzschutzleiter die sehr hohen Blitzströme überstehen können, müssen diese einen großen Durchmesser aufweisen. Dies hat aber zur Folge, dass die Blitzschutzleiter eine hohe mechanische Torsionssteifigkeit aufweisen. Wenn der in der Rotornabe angeordnete Blitzschutzleiter drehfest mit der Anschlussvorrichtung verbunden wäre, würde sich dieser bei einer Drehung des Rotorblattes tordieren und sich somit beschädigen. Durch die drehbare Anordnung des zweiten Übertragungsmittels, wird das Übertragungsmittel durch die Torsionssteifigkeit des damit verbundenen Blitzschutzleiters bei einer Drehung des Rotorblattes nachgeführt, so dass das Fixierelement immer in der Richtung des Blitzschutzleiters zeigt. Durch die Nachführung wird eine Tordierung des Blitzschutzleiters verhindert, stattdessen wird der in der Schleife geführte Blitzschutzleiter einer, für den Blitzschutzleiter unkritischen, Biegung ausgesetzt.

Untersuchungen an den bekannten Blitzschutzvorrichtungen haben gezeigt, dass ein Teil des Blitzstromes, durch die lagernahe Anordnung der Funkenstrecke und der sich durch die hohen Fertigungstoleranzen ständig variierende Abstand der Übertragungsmittel der Funkenstrecke, durch das Blattlager geführt wird. Durch den durch das Lager geführten Blitzstrom kann es zu Ausschmelzungen an den Lagerteilen kommen. Diese Ausschmelzungen führen wiederum zu einem höheren Verschleiß in dem Lager und im schlimmsten Fall zur kompletten Zerstörung der mechanischen Teile. Durch die erfindungsgemäße, von dem Blattlager entfernten, Anordnung der Anschlussvorrichtung und den festen Abstand zwischen den Übertragungsmitteln, wird ein Stromfluss durch das Blattlager und somit eine Beschädigung des Blattlagers im Wesentlichen verhindert.

Bei der oben beschriebenen Ausführung werden das erste Übertragungsmittel und die Haltevorrichtung an dem Rotorblatt angeordnet. Selbstverständlich können das erste Übertragungsmittel und die Haltevorrichtung auch an der Rotornabe angeordnet sein, sodass der in dem Rotorblatt angeordnete Blitzschutzleiter mit dem zweiten drehbaren Übertragungsmittel und der in der Rotornabe angeordnete Blitzschutzleiter mit dem ersten Übertragungsmittel verbunden ist. Wichtig ist, dass der mit dem ersten Übertragungsmittel verbundene und der mit dem zweiten Übertragungsmittel verbundene Blitzschutzleiter verdrehbar zueinander angeordnet sind.

Die Anschlussvorrichtung kann selbstverständlich auch zum Verbinden von Blitzschutzleitern zwischen anderen zueinander verdrehbaren Komponenten, wie zum Beispiel Maschinenhaus und Turm, verwendet werden.

Weitere Einzelheiten der Erfindung gehen aus den Zeichnungen anhand der Beschreibung hervor.

In den Zeichnungen zeigt
- Fig. 1: eine Windturbine,
- Fig. 2: eine als Funkenstrecke und Schleifkontakt ausgebildete Anschlussvorrichtung,
- Fig. 3: die Anschlussvorrichtung als Funkenstrecke ausgebildet,
- Fig. 4: einen als Schleifkontakt ausgebildeten Aufsatz für die Anschlussvorrichtung,
- Fig. 5: die Anschlussvorrichtung in zwei verschiedenen Blattpositionen.

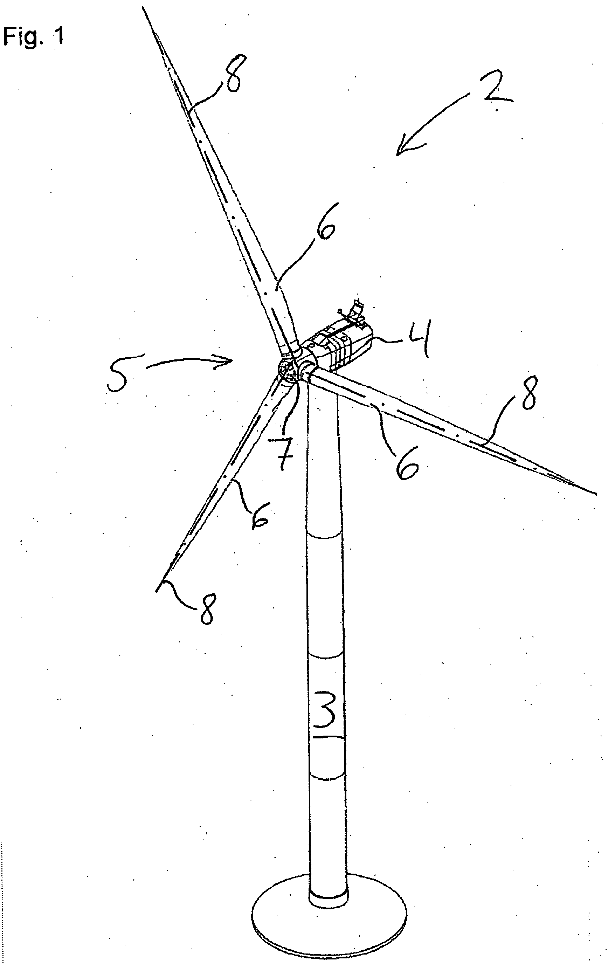

In Figur 1 wird eine Windturbine 2 gezeigt. Die Windturbine 2 umfasst einen Turm 3, ein auf dem Turm 3 drehbar gelagertes Maschinenhaus 4, ein in dem Maschinenhaus 4 angeordneter Triebsstrang und einen an den Triebsstrang angeordneten und dem Triebsstrang antreiben Rotor 5. Der Rotor 5 umfasst eine Rotornabe 7 und mindestens ein drehbar um eine Blattachse 8 mit der Rotornabe 7 verbundenes Rotorblatt 6. Da das Rotorblatt 6 der höchste Punkt der Windturbine 2 darstellt, wird das Rotorblatt 6 mit einer Blitzschutzvorrichtung zum Ableiten von hohen Blitzströmen versehen. Der Blitzstrom wird dabei von dem Rotorblatt 6 über die Drehverbindung zwischen Rotorblatt 6 und Rotornabe 7 in die Rotornabe 7 und danach durch das Maschinenhaus 4 und dem Turm 3 bis zum Erdboden geführt. Um eine Drehung des Rotorblattes 6, und somit eine Änderung der dynamischen Eigenschaften des Rotors 5, und gleichzeitig eine sichere Übertragung des Blitzstromes zu gewährleisten, wird der Rotor 5 mit einer Anschlussvorrichtung 1 zum Verbinden eines ersten, in dem Rotorblatt 6 angeordneten, Blitzschutzleiters und eines zweiten, in der Rotornabe 7 angeordneten, Blitzschutzleiters versehen.

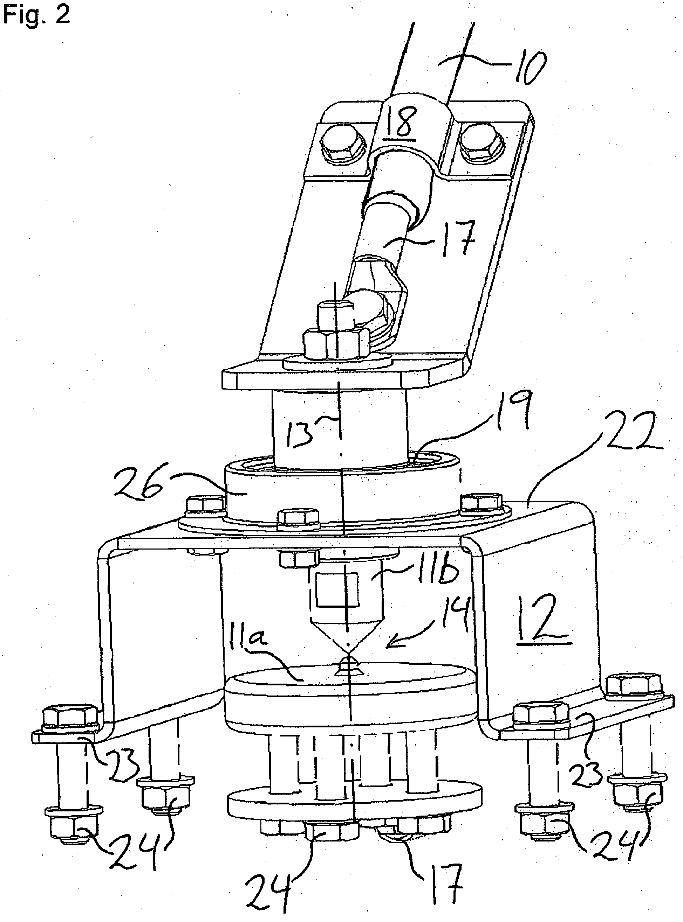

Figur 2 zeigt die erfindungsgemäße Anschlussvorrichtung 1. Die Anschlussvorrichtung 1 umfasst ein erstes Übertragungsmittel 11a und ein zweites Übertragungsmittel 11b. Das erste Übertragungsmittel 11a ist mittels Verbindungselementen 24 an dem Rotorblatt 6 angeordnet. Der in dem Rotorblatt 6 angeordnete Blitzschutzleiter wird über ein Anschlusselement 17 mit dem ersten Übertragungsmittel 11a verbunden. Das zweite Übertragungsmittel 11b ist drehbar über ein Drehlager 19 an einer Haltevorrichtung 12 angeordnet. Das Drehlager 19 erlaubt eine Drehung des zweiten Übertragungsmittel 11b um eine Drehachse 13, verhindert aber eine Bewegung des zweiten Übertragungsmittels 11 b in radialer und axialer Richtung der Drehachse 13. Die Haltevorrichtung 12 umfasst eine Aufnahmefläche 22 zum Aufnehmen des Drehlagers 19 und mindestens einen Flansch 23 zum Verbinden der Haltevorrichtung mit dem Rotorblatt 6. Die Haltevorrichtung 12 wird mittels an dem Flansch 23 anordenbare Verbindungselemente 24 mit dem Rotorblatt 6 verbunden. Zum Einstellen des Abstands zwischen den beiden Übertragungsmitteln 11a, 11 b kann die Höhe der Haltevorrichtung durch platzieren von Unterlegscheiben zwischen Flansch 23 und Rotorblatt 6. Alternativ kann der Flansch 23 und die Verbindungsmittel 24 mit einem Gewinde versehen sein, so dass die Höhe der Haltevorrichtung 12 durch Drehen der Verbindungsmittel 24 verstellt werden kann. An dem von der Funkenstrecke 14 am weitesten entfernten Ende ist das zweite Übertragungsmittel 11 b mit einem Anschlusselement 17 und einem Fixierelement 18 zum anschließen und fixieren des mit der Rotornabe 7 verbundenen Blitzschutzleiters versehen. Um den benötigten Potentialunterschied zum übertragen eines Blitzstromes zwischen den beiden Übertragungsmitteln 11a, 11 b zu reduzieren wird das Übertragungsmittel 11 b mit einem spitzen Ende versehen. Um einen Austausch des Drehlagers 19 zu ermöglichen wird das Drehlager 19 mit Hilfe eines lösbar an der Aufnahmefläche 22 angeordneter Haltekragen 26 an der Haltevorrichtung 12 angeordnet.

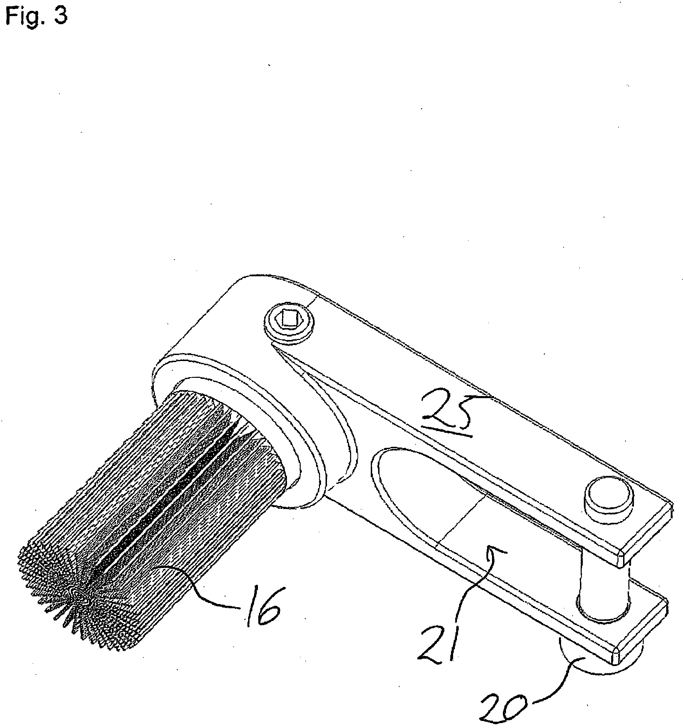

Figur 3 zeigt eine Schleifbürste 16 zum Übertragen von geringeren Potentialströmen von dem Rotorblatt 6 zu der Rotornabe 7. Die Schleifbürste 16 kann entweder in dem Übertragungsmittel 11 b integriert werden oder auch als Aufsatz ausgebildet sein. Der Aufsatz wird an das als Funkenstrecke ausgebildete zweite Übertragungsmittel 11 b befestigt, so dass die Längsachse der Schleifbürste parallel zu der Drehachse 13 des zweiten Übertragungsmittels 11 b verläuft. Der Aufsatz besteht aus einem Haltearm 25, mit einem Schlitz 21 zum Aufnehmen des zweiten Übertragungsmittels 11b und einer Spannschraube 20 zum befestigen des Aufsatzes auf dem zweiten Übertragungsmittel 11 b.

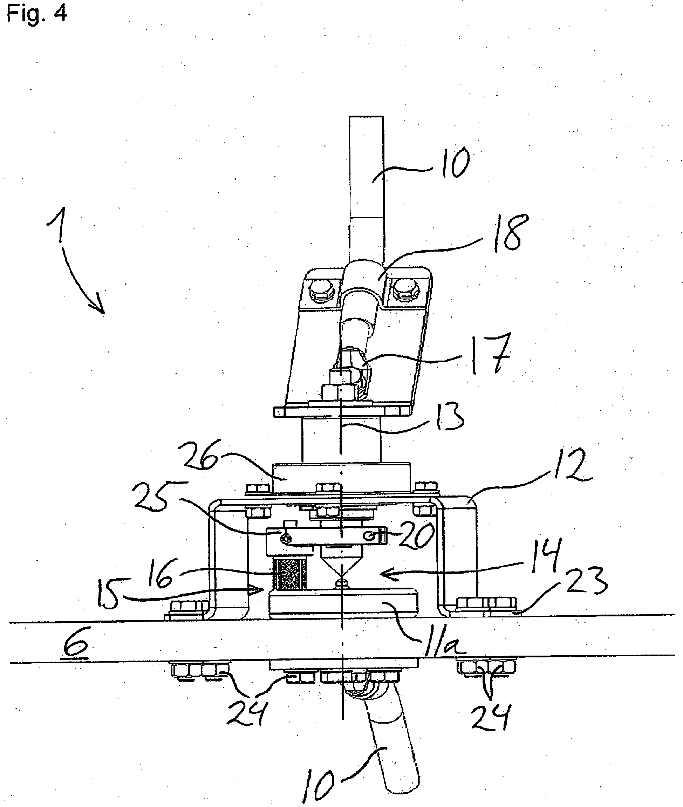

Figur 4 zeigt die Anschlussvorrichtung 1 mit der, auf dem zweiten Übertragungsmittel, 11 b aufgesetzten Schleifbürste 16. Der Schlitz 21 des Haltearms 25 wird dabei über das zweite Übertragungsmittel 11 b aufgeschoben und mit der Spannschraube 20 befestigt, so dass die Längsachse der Schleifbürste 16 parallel zu der Drehachse 13 des zweiten Übertragungsmittel 11 b verläuft und die Schleifbürste 16 einen Schleifkontakt 15 mit dem ersten Übertragungsmittel 11 a bildet. Die Länge des Haltearms 25 und der Durchmesser des ersten Übertragungsmittel 11 a werden derart gewählt, so dass der Schleifkontakt 15 zwischen Schleifbürste 16 und das erste Übertragungsmittel 11a bei einer Drehung des zweiten Übertragungsmittel 11 b aufrechterhalten bleibt. Durch die Kombination aus Schleifkontakt 15 und Funkenstrecke 14 können sowohl geringe Potentialströme als auch hohe Blitzströme von der Anschlussvorrichtung 1 übertragen werden.

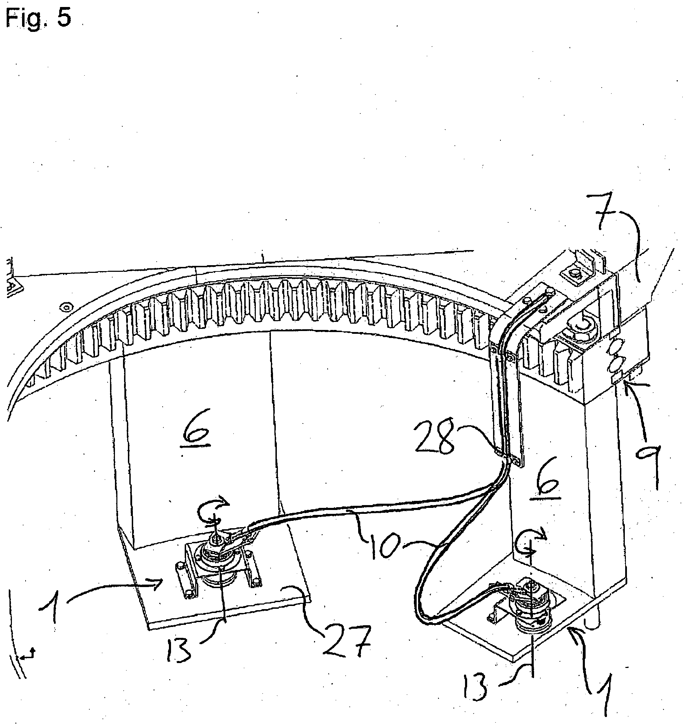

In Figur 5 wird dieselbe Anschlussvorrichtung 1 im montierten Zustand und in zwei verschiedenen Blattpositionen gezeigt. Die Anschlussvorrichtung 1 wird an einer in radialer Richtung der Blattachse 8 verlaufende Fläche 27 des Rotorblatts 6 angeordnet. Der in einer Schleife geführte und mit der Rotornabe 7 verbundene Blitzschutzleiter 10 wird an dem Anschlusselement 17 des zweiten Übertragungsmittels 11 b angeschlossen und mit dem Fixierelement 18 an dem zweiten Übertragungsmittel 11 b fixiert. Bei einer Drehung des Rotorblattes 6 wird das zweite Übertragungsmittel 11 b durch die Tordiersteifigkeit des Blitzschutzleiters 10 um die Drehachse 13 gedreht, so dass das Übertragungsmittel 11 b nachgeführt wird und das Anschlusselement 17 in jeder Position des Rotorblattes in Richtung Befestigungspunkt 28 des Blitzschutzleiters 10 an der Rotornabe 7 zeigt. Somit wird ein Tordieren des Blitzschutzleiters 10 im Wesentlichen verhindert. Der in der Schleife geführte Teil des Blitzschutzleiters 10 wird stattdessen einer unschädlichen Biegung ausgesetzt.

Die in den beschriebenen Ausführungsbeispielen offenbarten Merkmalskombinationen sollen nicht limitierend auf die Erfindung wirken.

### Bezugszeichenliste

| | | | |
|---|---|---|---|
| 1 | Anschlussvorrichtung | 15 | Schleifkontakt |
| 2 | Windturbine | 16 | Schleifbürste |
| 3 | Turm | 17 | Anschlusselement |
| 4 | Maschinenhaus | 18 | Fixierelement |
| 5 | Rotor | 19 | Drehlager |
| 6 | Rotorblatt | 20 | Spannschraube |
| 7 | Rotornabe | 21 | Schlitz |
| 8 | Blattachse | 22 | Aufnahmefläche |
| 9 | Blattlager | 23 | Flansch |
| 10 | Blitzschutzleiter | 24 | Verbindungselement |
| 11a | Erstes Übertragungsmittel | 25 | Haltearm |
| 11b | Zweites Übertragungsmittel | 26 | Haltekragen |
| 12 | Haltevorrichtung | 27 | Radiale Fläche des Rotorblatts |
| 13 | Drehachse | 28 | Befestigungspunkt |
| 14 | Funkenstrecke | | |

## Patentansprüche

1. Windturbine (2) mit einem Rotorblatt (6) und einer Rotornabe (7), wobei das Rotorblatt (6) über ein Blattlager (9) drehbar um eine Blattachse (8) an der Rotornabe (7) angeordnet ist, sowie mit einem Blitzschutzsystem mit einer in dem Rotorblatt (6) angeordneten Anschlussvorrichtung (1) zum Anschließen eines ersten, fest mit dem Rotorblatt (6) verbundenen, in dem Rotorblatt (6) angeordneten, Blitzschutzleiters (10) an einen zweiten, fest mit der Rotornabe (7) verbundenen, Blitzschutzleiter (10), **dadurch gekennzeichnet, dass**
a. die Anschlussvorrichtung (1) ein fest an dem Rotorblatt (6) montiertes und mit dem ersten Blitzschutzleiter (10) verbundenes erstes Übertragungsmittel (11a) und
b. ein zweites, mit dem zweiten Blitzschutzleiter (10) verbundenes, Übertragungsmittel (11 b) umfasst,
c. wobei das erste Übertragungsmittel (11 a) und das zweite Übertragungsmittel (11 b) eine Funkenstrecke bilden, und
d. wobei das zweite Übertragungsmittel (11 b) derart drehbar angeordnet ist, so dass das zweite Übertragungsmittel (11 b) drehbar um eine parallel zur Blattachse (8) verlaufende Drehachse (13) bewegbar ist, der Abstand zwischen den beiden Übertragungsmitteln (11a, 11b) in radialer und axialer Richtung der Drehachse (13) jedoch immer im Wesentlichen konstant bleibt.

2. Windturbine (2) nach Anspruch 1, **dadurch gekennzeichnet, dass** das zweite Übertragungsmittel (11b) über ein Drehlager (19) mit einer Haltevorrichtung (12) verbunden ist und die Haltevorrichtung (12) an dem Rotorblatt (6) angeordnet ist.

3. Windturbine (2) nach Anspruch 1 oder 2, **dadurch gekennzeichnet; dass** der Abstand zwischen den Übertragungsmitteln (11a, 11b) verstellbar ist.

4. Windturbine (2) nach Anspruch 3, **dadurch gekennzeichnet, dass** der Abstand durch verändern der Position der Haltevorrichtung (12) in Bezug auf dem Rotorblatt (6) verstellt werden kann.

5. Windturbine (2) nach Anspruch 3, **dadurch gekennzeichnet, dass** der Abstand durch verändern der Position der zweiten Übertragungsvorrichtung (11 b) in Bezug auf der Haltevorrichtung verstellt werden kann.

6. Windturbine (2) nach einem der vorangestellten Ansprüche, **dadurch gekennzeichnet, dass** das sich das zweite Übertragungsmittel (11 b), bei einer Drehung des Rotorblattes (6), durch die Torsionssteife des Blitzschutzleiters (10) nachführen lässt und somit ein Tordieren des an dem zweiten Übertragungsmittel (11 b) angeordneten Blitzschutzleiters (10) im Wesentlichen verhindert wird.

7. Windturbine (2) nach einem der der vorangestellten Ansprüche, **dadurch gekennzeichnet, dass** die Übertragungsmittel (11a, 11b) sowohl als Funkenstrecke (14) und als Schleifkontakt (15) ausgebildet sind.

8. Windturbine (2) nach einem der vorangestellten Ansprüche, **dadurch gekennzeichnet, dass** das zweite Übertragungsmittel (11 b) elektrisch isoliert zu der Haltevorrichtung (12) ausgebildet ist.

9. Windturbine (2) nach einem der vorangestellten Ansprüche, **dadurch gekennzeichnet, dass** die Haltevorrichtung (12) und das erste Übertragungsmittel (11a) elektrisch isoliert zueinander ausgebildet sind.

## Claims

1. Wind turbine (2) with a rotor blade (6) and a rotor hub (7), whereas the rotor blade (6) is rotatably mounted via a blade bearing (9) around a blade axis (8) on the rotor hub (7), as well as with a lightning protection system with a connecting device (1) arranged in the rotor blade (6) for connecting a first lightning arrester (10), firmly arranged on the rotor blade (6), arranged in the rotor blade (6), onto a second lightning arrester (10), firmly arranged on the rotor hub (7), **characterized in that**
a. the connecting device (1) comprises a first transmitting device (11 a) firmly arranged on the rotor blade (6) and connected with the first lightning arrester (10) and
b. a second transmitting device (11b) connected with the second lightning arrester (10),
c. whereas the first transmitting device (11 a) and the second transmitting device (11 b) form a spark gap, and
d. whereas the second transmitting device (11 b) is rotatably arranged in a way that the second transmitting device (11 b) is rotationally movable around a blade axis (8) parallel to the rotary axis (13), but the distance between the two transmitting devices (11 a, 11 b) in radial and axial direction of the rotary axis (13) remains always mainly constant.

2. Wind turbine (2) according to claim 1, **characterized in that** the second transmitting device (11 b) is connected with the holding device (12) by means of a pivot bearing (19) and the holding device (12) is arranged on the rotor blade (6).

3. Wind turbine (2) according to claim 1 or 2, **characterized in that** the distance between the transmitting devices (11 a, 11 b) is adjustable.

4. Wind turbine (2) according to claim 3, **characterized in that** the distance can be adjusted by changing the position of the holding device (12) in relation to the rotor blade (6).

5. Wind turbine (2) according to claim 3, **characterized in that** the distance can be adjusted by changing the position of the second transmitting device (11 b) in relation to the holding device (12).

6. Wind turbine (2) according to one of the previous claims, **characterized in that** the second transmitting device (11 b) can be adjusted at a rotation of the rotor blade (6) due to the torsional stiffness of the lightning arrester (10) and therefore a twisting of the lightning arrester (10) arranged on the second transmitting device (11 b) is avoided.

7. Wind turbine (2) according to one of the previous claims, **characterized in that** the transmitting devices (11a, 11b) are designed as spark gap (14) as well as sliding contact (15).

8. Wind turbine (2) according to one of the previous claims, **characterized in that** the second transmitting device (11 b) is designed electrically isolated to the holding device (12).

9. Wind turbine (2) according to one of the previous claims, **characterized in that** the holding device (12) and the first transmitting device (11a) are designed electrically isolated to each other.

## Revendications

1. Une éolienne (2) avec une pale de rotor (6) et un moyeu de rotor (7), où la pale de rotor (6) est monté de manière rotative avec un roulement de pale (9) autour de l'axe de la pale (8) sur le moyeu de rotor (7), comprenant un système de protection contre la foudre avec une prise de raccordement (1) monté dans la pale de rotor (6) pour connecter le premier dispositif de protection contre la foudre (10), fermement attaché sur la pale de rotor (6), disposé dans le pale de rotor (6) sur un second dispositif de protection contre la foudre (10) fermement attaché au moyeu du rotor (7), caractérisé en ce fait
a. la prise de raccordement (1) comprend un premier dispositif de transmission (11a) fermement attaché à la pale de rotor (6) et relié au premier système de protection contre la foudre (10), et
b. un second dispositif de transmission (11 b) relié au deuxième système de protection contre la foudre (10),
c. tandis que le premier dispositif de transmission (11a) et le second dispositif de transmission (11b) forment un éclateur, et
d. tandis que le second dispositif de transmission (11b) est installé de manière rotative de manière à ce que le deuxième dispositif de transmission (11 b) soit mobile en rotation autour de l'axe de la pale (8) parallèle à l'axe de rotation (13), mais la distance entre les deux dispositifs de transmission (11a, 11 b) dans la direction radiale et axiale de l'axe de rotation (13) reste approximativement toujours constante.

2. Eolienne (2) selon la revendication 1, **caractérisée en ce que** le deuxième dispositif de transmission (11 b) est relié au dispositif de fixation (12) au moyen d'un palier de pivotement (19) et le dispositif de fixation (12) est attaché la pale de rotor (6).

3. Eolienne (2) selon la revendication 1 ou 2, **caractérisée en ce que** la distance entre les dispositifs de transmission (11a, 11 b) est réglable.

4. Eolienne (2) selon la revendication 3, **caractérisée en ce que** la distance puisse être ajustée en changeant la position du dispositif de fixation (12) par rapport à la pale du rotor (6).

5. Eolienne (2) selon la revendication 3, **caractérisée en ce que** la distance puisse être ajustée en changeant la position du deuxième dispositif de transmission (11 b) par rapport à au dispositif de fixation (12).

6. Eolienne (2) selon l'une des revendications précédentes, **caractérisée en ce que** le deuxième dispositif de transmission (11b) peut être ajusté à une rotation de la pale du rotor (6) en raison de la rigidité en torsion du système de protection contre la foudre (10) et donc par conséquent, éviter une torsion du système de protection contre la foudre (10) qui est attaché au second dispositif de transmission (11 b).

7. Eolienne (2) selon l'une des revendications précédentes, **caractérisée en ce que** les dispositifs de transmission (11a, 11 b) sont conçus pour former un éclateur (14) ainsi qu'un contact (15) glissant.

8. Eolienne (2) selon l'une des revendications précédentes, **caractérisée en ce que** le second dispositif de transmission (11b) soit isolé électriquement du dispositif de fixation (12).

9. Eolienne (2) selon l'une des revendications précédentes, **caractérisée en ce que** le dispositif (12) de maintien et le premier dispositif de transmission (11a) soit conçus pour électriquement isolé de l'un a l'autre.
